# EUROPEAN PATENT APPLICATION

(11) **EP 2 667 545 A1**
(43) Date of publication of application: **27.11.2013**
(21) Application number: 11855968.1
(22) Date of filing: 12.12.2011
(51) Int. Cl.: H04L 12/56

(54) **NETWORK SYSTEM, CONTROLLER, SWITCH, AND TRAFFIC MONITORING METHOD**

(30) Priority: 17.01.2011 JP 2011006719
(71) Applicant: NEC Corporation, Tokyo 108-8001 (JP)
(72) Inventor: KAWAI Ryosuke, Tokyo 108-8001 (JP)
(74) Representative: Vossius & Partner
(86) International application number: PCT/JP2011/078700
(87) International publication number: WO 2012/098786

(57) **Abstract**

Fine traffic monitoring is achieved in a network in which sFlow and OpenFlow are combined. Specifically, flow identifiers (flow IDs) for identifying flows (or groups of packets) are prepared, and the flow identifiers are stored in entries of flow tables to allow sFlow agents to specify the flow identifiers as data sources. Specifically, the flow identifiers are stored in cookies of entries registered in flow tables of switches from a controller, and operations are performed for received packets matching the rules of the entries in accordance with the actions defined in the entries. In the switches, the flow identifiers specified as data sources in the MIBs used in sFlow are obtained and statistic information of packets matching the entries is obtained on the basis of the flow identifiers.

## Description

### Technical Field

The present invention is related to a network system, more particularly, to a traffic monitoring method in a network system.

### Background Art

Traffic monitoring is one important factor for ensuring a QoS (quality of service) in the network operation.

One major traffic monitoring method is "sFlow" (RFC3176), which is a technique for monitoring the traffic of switches, routers and the like in a Gigabit network.

The sFlow is a traffic management technique based on packet sampling, in which a specific percentage of data to be monitored are collected to generate traffic information by a statistic approach. The sFlow have been open to the public and provided free of charge as IETF (Internet engineering task force) RFC (request for comment) 3176, since September 2001.

### [sFlow]

An overview of monitoring based on sFlow is described below.

In a network monitored by sFlow, an sFlow collector which operates outside an NW device (a network connection device) controls an sFlow agent which operates inside the NW device and performs various settings for an MIB (management information base), by transmitting control messages defined in SNMP (simple network management protocol) to the NW device.

The sFlow allows specifying a data source in the MIB for identifying packets from which statistic information is to be obtained. The statistic information herein means statistic information based on sampling values. In the sFlow, the entire region (field) of header information of each packet is specified as a data source. The sFlow agent performs packet checking on the basis of the data source specified in the MIB.

Items listed below may be specified as a data source in the MIB:

iflndex.<l>: this data source is specified in units of ports. A port number is specified as <l>. All ports are specified if <l> is specified as zero.

smonVlanDataSource.<V>: this data source is specified in units of VLANs. A VLAN identifier (IEEE 802.1Q) is specified as <V>.

entPhysicalEntry.<N>: a physical entity (constituent element) of an sFlow agent.

In the packet checking, the sFlow agent classifies packets on the basis of the data source, performs random sampling at a frequency defined as a threshold value on average (for example, one packet is sampled for every 1000 packets), and transmits sampling values as statistic information by using sFlow datagrams to an sFlow collector. For example, the sFlow agent transmits to the sFlow collector copies of headers of packets subjected to the sampling (sample packets) and counter values of respective interfaces of physical ports, VLAN ports and the like, as the statistic information by using sFlow datagrams.

The sFlow collector performs statistical processing based on the statistic information.

It should be noted that an sFlow agent may be software or hardware operating on an NW device, such as switches. In general, an sFlow agent is mounted on a network connection device such as a router and a switch in the form of an ASIC (application specific integrated circuit). On the other hand, an sFlow collector is realized by software operating on a computer such as servers.

Details of sFlow are described in non-patent literatures 1 and 2.

One advantages of sFlow, which uses a simple sampling mechanism and can be implemented by hardware, is that deterioration of the network performance is reduced due to a reduced load.

One drawback of sFlow is that statistic information of an important sort of packets may fail to be obtained if the number of the packets does not exceed the threshold (that is, statistic information may be omitted for an important sort of packets, the number of which does not exceed the threshold); this results from the fact that sFlow obtains statistic information only for kinds of packets the number of which exceed the threshold.

One promising traffic monitoring method other than sFlow is "OpenFlow".

### [OpenFlow]

An overview of monitoring based on OpenFlow is described below.

In a network monitored by OpenFlow, a controller, such as an OFC (OpenFlow controller), controls and monitors the operation of switches, such as OFSes (OpenFlow switches), by operating flow tables of the switches by control messages defined in the OpenFlow protocol.

The flow table is a table into which entries are registered, each defining a predetermined action to be done for a packet matching a predetermined matching condition (or a rule). A group of packets (or a sequence of packets) matching a rule are referred to as flow. The packet may be referred to as frame.

Note that the flow defined in OpenFlow is a different concept from that defined in sFlow.

The rules of flows are defined as various combinations of any or all of a destination address, a source address, a destination port and a source port, which are described in the header information region (or field) of each protocol layer of the packet, and are distinguishable from each other. The above-described addresses may be a MAC (media access control) address or an IP (internet protocol) address. In addition, information of the ingress port may be used in the rule of a flow.

Usually, the action of a flow is determined as packet transfer to a predetermined destination. Note that the action of a flow may be specified as packet discard.

The OpenFlow, which controls switches by an external controller, allows flexible external control of switches of different vendors by defining a protocol between the switches and the controller.

In an OpenFlow system, when receiving a packet which matches no entry, a switch transmits to the controller an inquiry related to the received packet (or an entry request). Usually, the switch forwards the received packet to the controller as an inquiry related to the received packet.

The controller is connected with switches to be controlled by the controller via secure channels. When receiving an inquiry related to a packet from a switch controlled by the controller, the controller calculates the path of the group of packets to which the packet belongs to (or the flow), and registers an entry indicating "to forward the group of packets to a predetermined destination" into the flow table of the switch, on the basis of the calculated path. In this case, the controller transmits a control message for registering the entry into the flow table.

Also, each switch refers to the flow table and, when a received packet matches an entry requesting statistic information, the switch obtains sampling values for the relevant flow and holds the sampling values as statistic information.

The controller obtains statistic information for each flow from switches by sending control messages defined in the OpenFlow protocol for statistic information collection, and uses the statistic information for traffic monitoring.

Details of OpenFlow are described in non-patent literatures 3 and 4.

One advantage of OpenFlow is that fine sampling can be achieved, because OpenFlow can set detailed matching conditions as the rules of flows for packets from which statistic information is desired to be obtained, compared to sFlow.

One drawback of OpenFlow is an increased deterioration of the network performance compared to sFlow, resulting from the fact that the controller and the switches communicate with each other under the control of the controller for obtaining statistic information.

As a related art, patent literature 1 (JP 2007-336512 A) discloses a statistic information collection system and a statistic information collection apparatus.
This related art discloses a communication information collection system including a statistic information collection apparatus and a collector apparatus, wherein the statistic information collection apparatus receives packets, collects statistic information of the received packets and transmits the collected statistic information to the collector apparatus, characterized in that the statistic information collection apparatus stores therein flow information including flow identification conditions for identifying flows to which the received packets belong to, classifies the collected statistic information of the packets for each of the flows identified by the flow identification conditions, and refers to the statistic information classified for each flow to determine transmission intervals for each flow, at which intervals the statistic information collection apparatus transmits the statistic information to the collector apparatus.

Also, patent literature 2 (JP 2010-041471 A) discloses a communication data statistical processing apparatus, a communication data statistical processing method and a program. In this related art, the communication data statistical processing apparatus, which takes the statistic under multiple kinds of conditions, includes: a reception section receiving packets; an integration section classifying packets for which the corresponding identifiers are same with respect to predetermined two or more identifiers into the same integrated flow and generating integrated statistic information of the packets belonging to the integrated flow; and a statistical processing section performing an update process of each statistic information for the statistic under multiple kinds of conditions, wherein the update process is repeated for a plurality of integrated flows, which involves: classifying an integrated flow into a statistic operation flow for which the corresponding identifier is same with respect to an identifier determining one statistic condition; and updating statistic information of packets belonging to the statistic operation flow on the basis of the corresponding integrated statistic information.

### Citation List

### Patent Literature

Patent literature 1: JP 2007-336512 A
Patent literature 2: JP 2010-041471 A

### Non-Patent Literature

Non-patent literature 1: "Chapter One: What is sFlow --- Basics of Traffic Management for Network Administrator: ITpro", <http://itpro.nikkeibp.co.jp/ article/COLUMN/20070410/267869/>
Non-patent literature 2: "InMon Corporation's sFlow: A Method for Monitoring Traffic in Switched and Routed Networks", <http://www.ietf.org/rfc/rfc3176.txt>
   Non-patent literature 3: "The OpenFlow Switch Consortium", <http://www.openflowswitch.org/>
Non-patent literature 4: "OpenFlow Switch Specification Version 1.0.0 (Wire Protocol 0x01) December 31, 2009", <http://www.openflowswitch.org/documents/ openflow-spec-v1.0.0.pdf>

### Summary of Invention

### [Cooperation of sFlow and OpenFlow]

A fine traffic monitoring is required in a network used in an enterprise field. For example, there are necessities of monitoring of the entire traffic for ensuring the QoS and avoiding failure, and of affirmation of packets which have high importance but extremely-reduced traffic.

The Applicant has been studying a network operation in which the drawbacks of sFlow and OpenFlow are compensated by combining sFlow and OpenFlow to thereby achieve fine traffic monitoring.

The use of sFlow allows statistical processing (sampling) without deteriorating the performance in a high-speed network.

The use of OpenFlow allows statistical processing for important packets from which statistic information cannot be obtained by sFlow (that is, packets which have high importance but extremely-reduced traffic).

Useful information can be obtained by combining the output results of both of sFlow and OpenFlow. For example, such combination makes it possible to monitor the tendency of the entire traffic, successful transmission of important packets, and existence of a problem in traffic involving important packets.

A network in which sFlow and OpenFlow are combined, however, suffers from a problem in achieving fine traffic monitoring as described below.

In sFlow, a data source for identifying packets from which statistic information are to be collected can be specified in the MIB; however, sFlow allows specifying only a portion of the header information field of each packet as a data source. In other words, sFlow allows specifying only information corresponding to a data source of the header information.

Accordingly, sFlow cannot be applied to a technique such as OpenFlow, in which matching conditions (or rules) are defined as arbitrary combinations of multiple regions (fields) which constitute the header information.

To address this, the present invention prepares flow identifiers for identifying flows (or groups of packets); a flow identifier is allowed to be stored in an entry of a flow table to thereby enable an sFlow agent to specify the flow identifier as a data source.

A network system according to the present invention includes a controller and a switch. The controller includes: a flow identifier manager having the function of assigning a flow identifier to a predetermined flow; an entry manager having the function of setting a flow table of the switch with entries in each of which a rule and an action are defined according to which the switch uniformly controls respective packets constituting a flow, and the function of registering the flow identifier assigned to the predetermined flow into a predetermined region of the entry related to the predetermined flow in the flow table. The switch includes: a forwarding section having the function of performing actions defined in the entries for received packets which match the rules defined in the entries and the function of recording statistic information of the received packets into the entries; and a statistical processing section having the function of obtaining a flow identifier corresponding to a flow specified as a target from which statistic information is to be obtained and the function of obtaining the statistic information of packets mating the entry containing the flow identifier at a predetermined frequency.

A controller according to the present invention includes: a flow identifier manager having the function of assigning a flow identifier to a predetermined flow; and an entry manager having the function of setting a flow table of a switch with entries in each of which a rule and an action are defined according to which the switch uniformly controls respective packets constituting a flow. The entry manager has the function of registering the flow identifier assigned to the predetermined flow into a predetermined region of the entry related to the predetermined flow in the flow table to thereby specify the predetermined flow as a target from which statistic information is to be obtained.

A switch according to the present invention includes: a flow table for setting entries in each of which a rule and an action are defined for uniformly controlling respective packets constituting a flow wherein each of the entries has a region storing a flow identifier corresponding to the flow; a forwarding section having the function of performing actions defined in said entries for received packets matching rules defined in the entries and recording statistic information of the received packets into the entries; and a statistical processing section having the function of obtaining a flow identifier corresponding to a flow specified as a target from which statistic information is to be obtained and obtaining statistic information of packets matching an entry containing the obtained flow identifier at a predetermined frequency.

In a traffic monitoring method according to the present invention, a controller sets a flow table of a switch with entries in each of which a rule and an action are defined according to which said switch uniformly controls respective packets constituting a flow, assigns a flow identifier to a predetermined flow, and registers the flow identifier assigned to the predetermined flow into a predetermined region of an entry related to the predetermined flow in said flow table. The switch performs actions defined in said entries for received packets matching rules defined in said entries, records statistic information of the received packets into said entries, obtains a flow identifier corresponding to a flow specified as a target from which statistic information is to be obtained, and obtains statistic information of packets matching an entry containing the obtained flow identifier at a predetermined frequency.

Programs according to the present invention causes a communication device used as a switch and a computer used as a controller to perform the processes in the above-described traffic monitoring method. The programs according to the present invention may be stored in a storage device or a recording medium.

A fine traffic monitoring is thereby realized in a network in which sFlow and OpenFlow are combined.

### Brief Description of Drawings

Fig. 1A is a conceptual diagram for explain an example of the configuration and operation of a network system in a first exemplary embodiment of the present invention;
Fig. 1B is a conceptual diagram showing an example of the configuration of a controller;
Fig. 1C is a conceptual diagram showing an example of the configuration of an sFlow collector;
Fig. 2 is a diagram for explaining the cookie;
Fig. 3 is a diagram for explaining header information of a packet;
Fig. 4 is a sequence diagram showing processes performed in the first exemplary embodiment of the present invention;
Fig. 5A is a conceptual diagram for explain an example of the configuration and operation of a network system in a second exemplary embodiment of the present invention;
Fig. 5B is a conceptual diagram showing an example of the configuration of a controller;
Fig. 5C is a conceptual diagram showing an example of the configuration of an sFlow collector; and
Fig. 6 is a sequence diagram showing the processing done in the second exemplary embodiment of the present invention;

### Description of Exemplary Embodiments

### <First Exemplary Embodiment>

A first exemplary embodiment of the present invention is described below with reference to the attached drawings.

### [Basic Configuration]

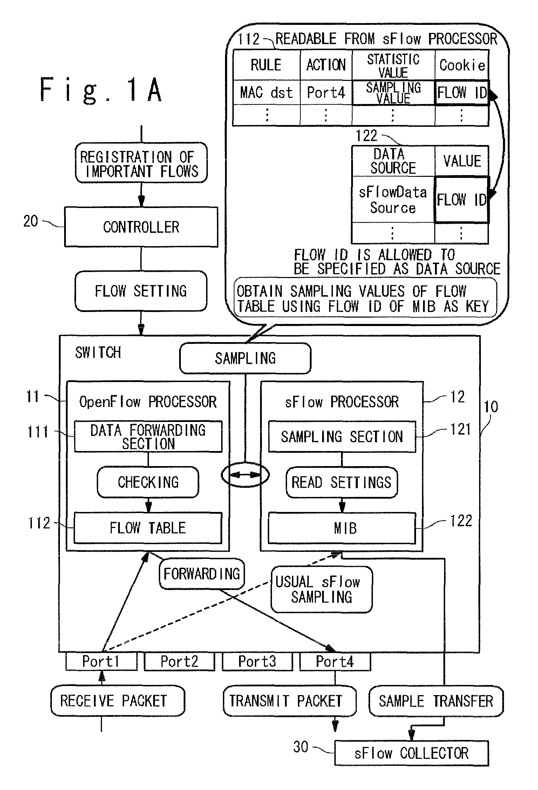

As shown in Fig. 1A, a network system according to the first exemplary embodiment of the present invention includes switches 10 (10-i, i= 1 to n: n is the number of switches), a controller 20 and an sFlow collector 30.

The switches 10 (10-i, i= 1 to n) and the controller 20 form an OpenFlow network. The switches witches 10 (10-i, i= 1 to n) are nodes in the OpenFlow network. The controller 20 is connected with the switches 10 (10-i, i= 1 to n) via secure channels. The sFlow collector 30 is connected with the switches 10 (10-i, i= 1 to n) via usual lines and collects statistic information received from the switches 10 (10-i, i= 1 to n).

### [Switch]

The switches 10 (10-i, i= 1 to n) are adapted to OpenFlow.

Each of the switches 10 (10-i, i= 1 to n) includes an OpenFlow processor (forwarding section) 11 and an sFlow processor (statistic processing section) 12.

### [OpenFlow Processor]

The OpenFlow processor 11 is realized as an OpenFlow agent operated on the switch. The OpenFlow agent stays resident on the switch 10 (10-i, i= 1 to n).

The OpenFlow processor 11 includes a data forwarding section 11.1, and a flow table 112.

### [Data Forwarding Section]

When the switch 10 (10-i, i= 1 to n) receives a packet, the data forwarding section 111 checks whether the received packet matches any of entries registered in the flow table 112. That is, the data forwarding section 111 compares the received packet with the matching conditions (or rules) defined in the entries, and determines the entry for which the header information of the received packet matches the matching condition (or rule) as a matching entry for the received packet.

When there is a matching entry for the received packet, the data forwarding section 111 forwards the received packet in accordance with the action defined in the matching entry, obtains a sampling value for the flow, and records (or stores) the sampling value as statistic information into the matching entry. In this exemplary embodiment, the data forwarding section 111 performs the action defined in the matching entry for the received packet, which matches the rule defined in the matching entry, and records the action as the statistic information into the matching entry.

It should be noted that, when the processing (or action) defined in the matching entry is discard of the packet, the data forwarding section 111 discards the received packet in accordance with the matching entry.

### [Flow Table]

The flow table 112 is a table into which entries are registered, each of which defines "statistics" for recording sampling values for each flow as statistic information and a "cookie" for setting a flow identifier (flow ID), in addition to the processing (or action) to be done for a packet (communication data) matching a predetermined matching condition (or rule). An entry which defines a "cookie" is used for obtaining statistic information. It should be noted that a flow identifier may be set in a region (or field) other than the "cookie" in each entry in an actual implementation.

The "cookie" is a region (or a field) of a unit64_t type (a 64-bit integer type) into which any value can be set when the entry is added or edited.

It should be noted that the "cookie" defined in OpenFlow cannot be obtained under normal conditions except for through the OpenFlow protocol, because the "cookie" is information necessary only when the entry is added or invalidated (or deleted).

In the present invention, a "cookie" region (field) is provided in each entry of the flow table 112, from which information can be obtained by a means other than the OpenFlow protocol.

Specifically, at least "statistics" and "cookie" regions of entries of the flow table 112 are made readable from the sFlow processor 12.

### [sFlow Processor]

The sFlow processor 12 is realized as an sFlow agent operating on the switch. The sFlow agent stays resident on the switch 10 (10-i, i= 1 to n).

The sFlow processor 12 includes a sampling section 121 and an MIB 122.

### [Sampling Section]

As is the case with usual sFlow, the sampling section 121 classifies packets on the basis of the data source in packet checking according to sFlow, performs random sampling at a frequency defined as a threshold value on average (for example, one packet is sampled for every 1000 packets), and transmits sampling values to the sFlow collector 30 as statistic information by using sFlow datagrams.

Also, the sampling section 121 refers to the MIB 122 to check whether a flow identifier is specified as a data source of the MIB 122.

The timing of this check may be the timing when the data forward section 111 compares a received packet with the flow table 112, or the timing when a sampling value obtained by the usual sampling according to sFlow is transmitted to the sFlow collector 30 as the statistic information by using an sFlow diagram.

When a flow identifier is specified as a data source of the MIB 122, the sampling section 121 detects an entry in which the specified flow identifier is stored by referring the "cookie" region (field) of each entry of the flow table 112, obtains a sampling value recorded as statistic information in the detected entry, and transmits the sampling value to the sFlow collector 30 as the statistic information.

Alternatively, when a flow identifier is specified as a data source of the MIB 122, the sampling section 121 informs the OpenFlow processor 11 of the flow identifier. The OpenFlow processor 11 determines whether an entry exists in which the flow identifier is stored in the "cookie" region (or field) and whether statistic information recorded in the entry exists, and, if the relevant statistic information exists, transmits this statistic information to the sampling section 121 as a response. The sampling section 121 may transmit to the sFlow collector 30 the statistic information received from the OpenFlow processor 11 as the response.

The present invention thereby allows sFlow to obtain and refer to the statistic information defined by OpenFlow.

### [MIB]

In the present invention, the following item is newly prepared as a data source which is allowed to be specified in the MIB 122:

sFlowData Source.<F>: This data source is specified in units of flows. A flow identifier specified in "cookie" is specified as <F>. If "0xffffffffffffffff" is specified, all flows are specified. Note that the notation beginning with "0x" means hexadecimal.

It should be noted that an actual implementation is not limited to this example.

### [Controller]

A controller 20 is a server functioning as a controller in OpenFlow; the controller 20 is realized by software run on the server.

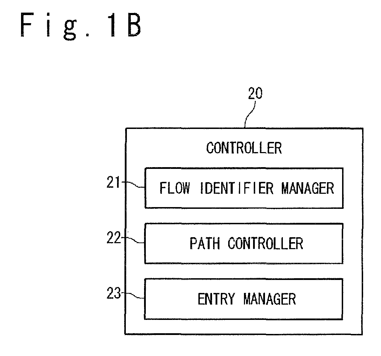

As shown in Fig. 1B, the controller 20 includes a flow identifier manager 21, a path controller 22 and an entry manager 23.

### [Flow Identifier Manager]

The flow identifier manager 21 generates or obtains flow identifiers and assigns the flow identifiers to the respective flows. The flow identifier 21 then informs the sFlow collector 30 of the flow identifiers.

It should be noted that, in the present invention, important flows from which statistic information is to be obtained are registered in advance in the controller 20. In other words, matching conditions (or rules) for identifying packets belonging to the important flows are registered in advance in the controller 20. The registration in advance into the controller 20 is achieved by using an external console terminal or management server. The flow identifier manager 21 assigns the flow identifiers to the important flows from which statistic information is to be obtained.

### [Path Controller]

When performing topology detection, the path controller 22 detects switches 10 (10-i, i= 1 to n) which constitute the network, and calculates the path of each flow to generate path information. Alternatively, when path information of the important flows from which statistic information is to be obtained, is registered in advance as well as the important flows, the path controller 22 holds the path information.

### [Entry Manager]

The entry manager 23 registers entries into the flow table 112. Specifically, the entry manager 23 holds the important flows from which statistic information is to be obtained, defines entries on the basis of the important flows and the path information, and transmits to the switches 10 (10-i, i = 1 to n) control messages for registering the entries into the flow table 112.

### [Cookie]

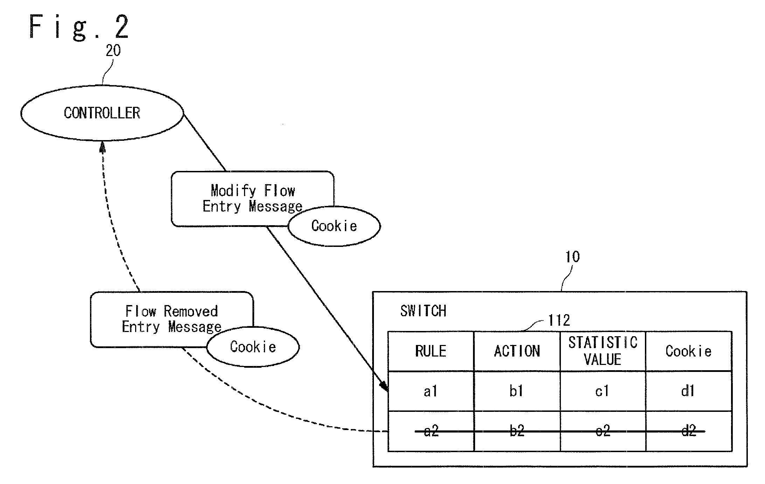

As shown in Fig. 2, the controller 20 is adapted to set a "cookie" in a control message "Modify Flow Entry Message", which is used to add or modify an entry of the flow table 20, when the controller 20 adds or modifies the entry. This allows the controller 20 to provide a "cookie" region (or field) in an entry of the flow table 112 and to store a predetermined flow entry in this region (or field).

Also, the controller 20 is adapted to incorporate a set value of a "cookie" (or flow identifier) in a control message "Read State Message", which is used for state obtainment, and in a control message "Flow Removed Message", which is used for removing an entry.

Note that, two major methods in which the controller registers entries according to OpenFlow include the "proactive type" and the "reactive type".

In the "proactive type" registration, the controller calculates the paths of predetermined groups of packets (flows) "in advance" (before starting data communications) and registers entries into the flow table. That is, the "proactive type" registration described herein means "entry registration in advance" which the controller voluntarily performs.

In the "reactive type" registration, the controller calculates the path of a flow of packets "when receiving an inquiry concerning the first packet (a new packet matching none of the entries) from a switch", and registers an entry into the flow table. That is, the "reactive type" registration described herein means "real-time entry registration" which the controller performs in actual data communications in response to an inquiry from a switch.

In this exemplary embodiment, the entry manager 23 sets a "cookie" in a control message "modify flow entry message" to add or modify an entry used for obtaining statistic information of an important flow which is registered in advance, incorporates a flow identifier in the "cookie" and registers the entry into the flow table in advance (or before the start of the communications) by the "proactive type" registration. The "in advance (or before the start of the communications)" described herein means "before the switch which has the flow table starts receiving or forwarding packets".

Alternatively, when receiving an inquiry concerning the first packet from a switch 10 (10-i, i = 1 to n), the entry manager 23 may set a "cookie" in an control message "modify flow entry message", which is explained above, and incorporate a flow identifier in the "cookie" to register the entry in the flow table 112 according to the "reactive type" registration.

Furthermore, when registering an entry into the flow table 112, the entry manager 23 may set a flow identifier stored in the "cookie" in the entry as a data source in the MIB 122.

For example, upon registration of an entry into the flow table 112, the entry manager 23 informs the sFlow collector 30 of the flow identifier stored in the "cookie" of the entry. The sFlow collector 30 obtains the flow identifier from the controller 20 and sets the flow identifier as a data source in the MIB 122 on the switch 10 (10-i, i = 1 to n).

### [sFlow collector]

The sFlow collector 30 is a server functioning a collector in sFlow and is realized as software operating on the server.

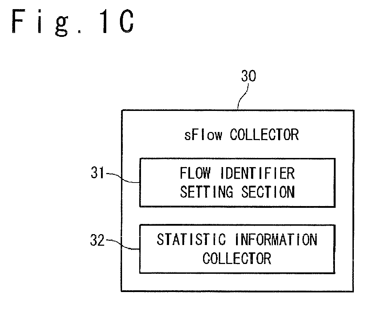

As shown in Fig. 1C, the sFlow collector 30 includes a flow identifier setting section 31 and a statistic information collector 32.

### [Flow Identifier Setting Section]

The flow identifier setting section 31 holds the flow identifiers informed from the controller 20, and sets the flow identifiers as data sources in the MIB 122 on the switches 10 (10-i, i = 1 to n).

### [Statistic Information Collector]

The statistic information collector 32 collects, edits and displays statistic information received from the sFlow processors 12. Further, the statistic information collector 32 may be configured to transmit edit data to an analyzer. The analyzer, which is not shown, graphically displays the data transmitted from the sFlow collector 30. Note that the analyzer may be incorporated in the sFlow collector 30.

### [Examples of Hardware]

Examples of the switches 10 (10-i, i =1 to n) may include network switches, routers, proxies, gateways, firewalls, load balancers, packet shapers, security monitor and controllers (SCADAs: supervisory control and data acquisition), gatekeepers, base stations, access points (APs), communication satellites (CSs) and computers having multiple communication ports. It should be noted that a switch 10 (10-i, i = 1 to n) may be a virtual switch established on a physical machine.

Possible examples of the controller 30 and the sFlow collector 30 include computers, such as PCs (personal computers), appliances, work stations, main frames, and super computers. It should be noted that the controller 20 and the sFlow collector 30 may be a virtual machine established on a physical machine.

Examples of the network which provides connections among the switches 10 (10-i, i = 1 to n), the controller 20, and the sFlow collector 30 may include the Internet, a LAN (local area network), a wireless LAN, a WAN (wide area network), a backbone, a cable television (CATV) line, a fixed-line telephone network, a cellular phone network, a WiMAX (IEEE 802.16a), 3G (third generation), a lease line, IrDA (infrared data association), Bluetooth (registered trademark), a serial communication line and a data bus.

Furthermore, the OpenFlow processor 11, the sFlow processor 12, the flow identifier manager 21, the path controller 22, the entry manager 23, the flow identifier setting section 31 and the statistic information collector 32 are each realized by a processor which operates based on programs to perform predetermined processes, a memory storing the programs and various data and a communication interface.

Possible examples of the above-mentioned processors include CPUs (central processing unit), microprocessors, microcontrollers and dedicated semiconductor integrated circuits (ICs).

Possible examples of the above-described memory includes: semiconductor memory devices such as RAMs (random access memories), ROMs (read only memories), EEPROMs (electrically erasable and programmable read only memories) and flash memories, auxiliary memory devices such as HDDs (hard disk drives) and SSDs (solid state drives), removable disks such as DVDs (digital versatile disks), and recording media such as SD (secure digital) memory cards. Instead, the memory may be a storage device which uses a DAS (direct attached storage), an FC-SAN (fiber channel-storage area network), an NAS (network attached storage), an IP-SAN (IP-storage area network) and the like.

Possible examples of the above-described communication interfaces include: boards adapted to network communications (mother boards and I/O boards), semiconductor integrated circuits such as chips, network adaptors such as NICs (network interface cards), similar extension cards, communication apparatus such as antennas, and communication ports of connectors and the like.

It should be noted that the OpenFlow processor 11, the sFlow processor 12, the flow identifier manager 21, the path controller 22, the entry manager 23, the flow identifier setting section 31 and the statistic information collector 32 may be each a module, a component, a dedicated device or a start (call) program.

It should be also noted that actual implementations are not limited to these examples.

### [Specific Examples of Flow Identifiers]

In the following, a description is given of specific examples of flow identifiers. The following (1) and (2) are two possible methods of issuing flow identifiers:

(1) A method in which unique values arbitrarily-determined are issued as flow identifiers from the controller independent of the header information region (field) of the packets

One possible numbering of the flow identifiers is, for example, to increment the flow identifiers one by one starting with zero. It should be noted that determining arbitrary one bit of the flow identifiers to indicate whether or not statistic information is to be obtained allows the sampling section 121 to obtain statistic information without special setting in the MIB 122.

When registering an entry into the flow table 112, the controller 20 assigns the entry to the sFlow collector 30. In this operation, the controller 20 specifies to the sFlow controller 30 a flow from which the controller 20 desires to obtain statistic information on the basis of the relation between the flows (the groups of packets) and the flow identifiers.

It should be noted that, in an actual implementation, an external console terminal or management server may obtain flow identifiers to be assigned and inform the sFlow collector 30 of the obtained flow identifiers.

The sFlow collector 30 obtains the flow identifiers, sets the flow identifiers as data sources in the MIBs 122 of the switches 10 (10-i, i = 1 to n), and instructs the sampling sections 121 to obtain statistic information.

Alternatively, an external console terminal, a management server or the controller 20 may directly instruct the sampling sections 121 to obtain statistic information.

(2) A method in which flow identifiers are generated by compressing header information of packets to issue the flow identifiers from the controller

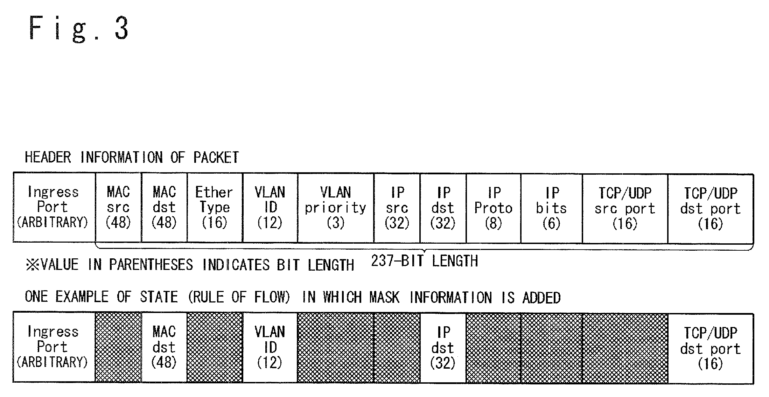

As shown in Fig. 3, header information of each packet includes regions (or fields) "ingress port: arbitrary number of bits)", "MAC src (source MAC address): 48 bits", "MAC dst (destination MAC address): 48 bits", "Ether type: 16 bits", "VLAN ID: 12 bits", "VLAN priority: 3 bits", "IP src (source IP address): 32 bits", "IP dst (destination IP address): 32 bits", "IP proto: 8bits", "IP Tos bits: 6 bits", "TCP/UDP src port (source port): 16 bits", "TCP/UDP dst port (destination port): 16 bits" and the like.

The rule of a flow is defined by using predetermined information (or a combination of information) in which mask information is added to the above-described header information of the packets.

The sum of the lengths of the respective regions (fields) of the header information of the packets other than "ingress port" is 237 bits, and therefore the header information exceeds 237 bits in sum, because the bit length of the "ingress port", which is defined as arbitrary, is further added.

The controller 20 calculates 64-bit flow identifiers by compressing header information of packets, the number of bits of which exceeds 237, with a compressing algorithm such as hash functions and informs the sFlow collector 30 of the calculated flow identifiers.

It should be noted that, in an actual implementation, an external console terminal or management server may calculate with a compressing algorithm 64-bit flow identifiers from the header information of packets from which statistic information is determined to be obtained in advance, and inform the controller 20 and the sFlow collector 30 of the calculated flow identifiers.

The sFlow collector 30 sets the flow identifiers as data sources in the MIB 122 and instructs the sampling sections 121 to obtain statistic information.

Alternatively, an external console terminal, management server or the controller 20 may directly instruct the sampling sections 121 to obtain statistic information.

### [Processes Performed in this Exemplary Embodiment]

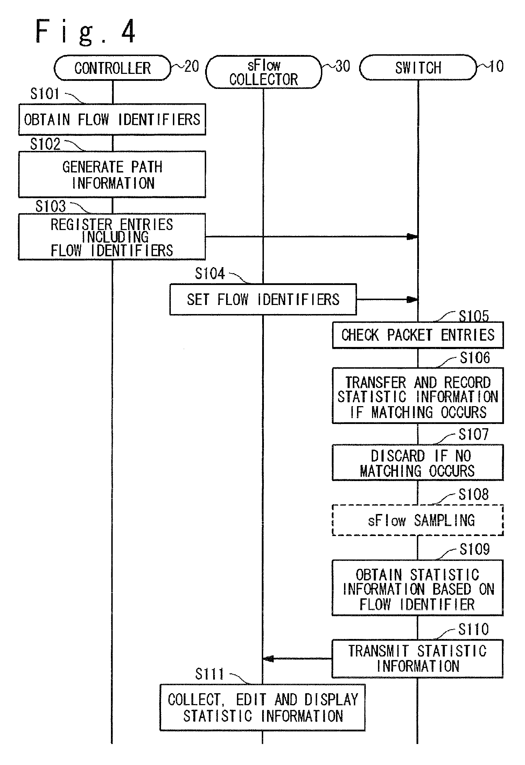

A description is given of processes performed in this exemplary embodiment with reference to Fig. 4.

### (1) Step S101

The flow identifier manager 21 obtains from an external console terminal, management server or the like flow identifiers corresponding to flows from which statistic information is to be obtained. It should be noted that in an actual implementation, the flow identifier manager 21 may obtain, from an external console terminal or management server, information of flows from which statistic information is to be obtained and generate flow identifiers by compressing header information of packets constituting the flows.

### (2) Step S102

When performing topology detection, the path controller 22 of the controller 20 detects the switches 10 (10-i, i = 1 to n) constituting the network and calculates the path of each flow to generate path information. Alternatively, if path information of important flows from which statistic information is to be obtained is also registered in advance from the external console terminal or management server in addition to the information of the flows, the path controller 22 may hold the path information.

### (3) Step S103

The entry manager 23 of the controller 20 defines entries on the basis of the flows from which statistic information is to be obtained and the path information thereof, sets the flow identifiers corresponding to the flows into the instant entries, and transmits to the switches 10 (10-i, i = 1 to n) control messages for registering the instant entries into the flow tables 112.

### (4) Step S104

When the flow identifiers corresponding to the flows from which statistic information is to be obtained are specified from the external console terminal or management server or from the entry manager 23 of the controller 20, the flow identifier setting section 31 of the sFlow collector 30 holds the flow identifiers and sets the flow identifiers as data sources in the MIBs 122 of the switches 10 (10-i, i = 1 to n).

### (5) Step S105

When a switch 10 receive a packet, the data forwarding section 111 of the switch 10 (10-i, i = 1 to n) checks whether the received packet matches any of the entries registered in the flow table 112. In other words, the data forwarding section 111 compares the mating conditions (or rules) defined in the entries with the received packet and determines the entry for which the header information of the received packet matches the matching condition (or the rule), as the matching entry for the received packet.

### (6) Step S106

When the matching entry exists for the received packet, the data forwarding section 111 forwards the received packet in accordance with the action defined in the matching entry, obtains the statistic information for the flow, and records the statistic information into the matching entry. In this exemplary embodiment, the data forwarding section 111 performs the action defined in the matching entry for the received packet, which matches the rule of the entry, and records the instant action as the statistic information into the matching entry.

### (7) Step S107

When no entry matches the received packet, the data forwarding section 111 discards the received packet. Alternatively, the data forwarding section 111 may process the received packet in accordance with a default entry, which is open to all packets.

### (8) Step S108

The sampling section 121 of each switch 10 (10-i, i = 1 to n) classifies packets on the basis of the data sources in packet checking in sFlow, as is the case with usual sFlow, performs random sampling at a frequency defined as a threshold value on average (for example, one packet is sampled for every 1000 packets), and transmits the sampling values as statistic information by sFlow datagrams to the sFlow collector 30. It should be noted that this process may be omitted in an actual implementation.

### (9) Step S109

The sampling section 121 refers to the MIB 122 to check whether any flow identifiers are specified as data sources in the MIB 122. The timing of this check may be the timing when the data forwarding section 111 compares received packets with the flow table 112 or the timing when the sampling section 121 transmits the sampling values obtained in the usual sFlow as the statistic information by using sFlow datagrams to the sFlow collector 30.

### (10) Step S110

When a flow identifier is specified as a data source of the MIB 122, the sampling section 121 refers to the "cookie" region (or field) of each entry of the flow table 112, detects the entry storing the same flow identifier, obtains the sampling values recorded as statistic information in the instant entry, and transmits the sampling values as the statistic information to the sFlow collector 30.

### (11) Step S111

The statistic information collector 32 of the sFlow collector 30 collects, edits and displays the statistic information received from the sampling sections 121.

### <Second Exemplary Embodiment>

A second exemplary embodiment of the present invention is described below with reference to the attached drawings. In this exemplary embodiment, in each of the switches 10 (10-i, i = 1 to n), when the OpenFlow processor 11 compares the entries of the flow table with a received packet, the sFlow processor 12 informs the OpenFlow process 11 of flow identifiers specified as data sources of the MIB 122 and receives packets which match the entries containing the flow identifiers as a response. The sFlow processor 12 performs sampling according to sFlow for these packets.

### [Configuration in This Exemplary Embodiment]

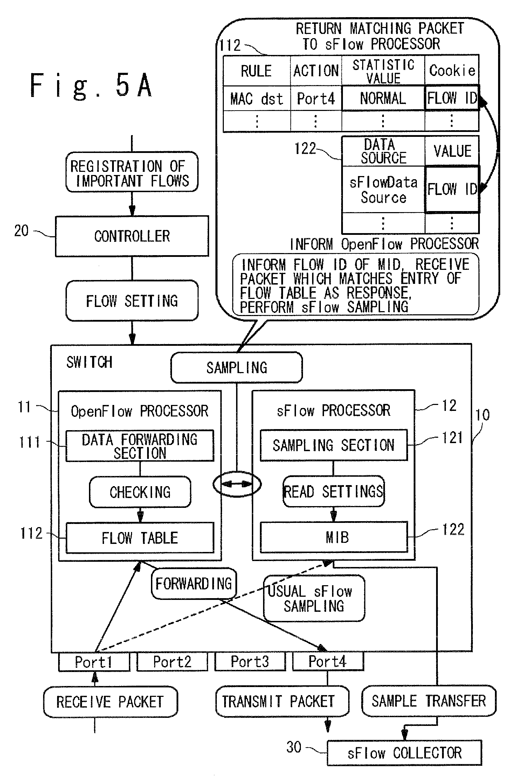

As shown in Fig. 5A, the configuration of the network system according to the second exemplary embodiment of the present invention is basically identical to that of the network system according to the first exemplary embodiment of the present invention.

As shown in Fig. 5A, the network system according to the second exemplary embodiment of the present invention includes switches 10 (10-i, i = 1 to n, where n is the number of the switches), a controller 20 and an sFlow collector 30.

Each switch 10 (10-i, i = 1 to n) includes an OpenFlow processor 11 and an sFlow processor 12.

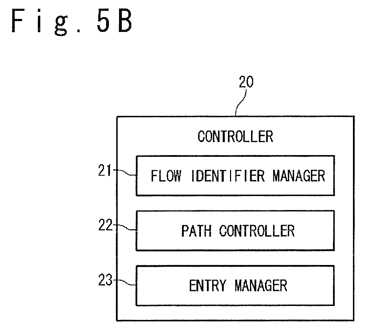

As shown in Fig. 5B, the controller 20 includes a flow identifier manager 21, a path controller 22 and an entry manager 23.

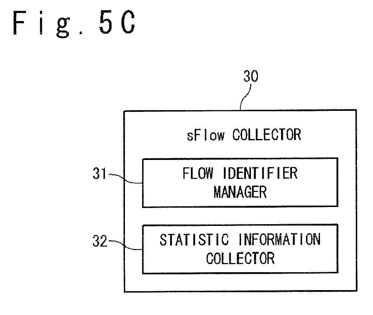

As shown in Fig. 5C, the sFlow collector 30 includes a flow identifier setting section 31 and a statistic information collector 32.

In this exemplary embodiment, the processes performed in the OpenFlow processor 11 and the sFlow processor 12 are different from those in the first exemplary embodiment.

### [Processes Performed in This Exemplary embodiment]

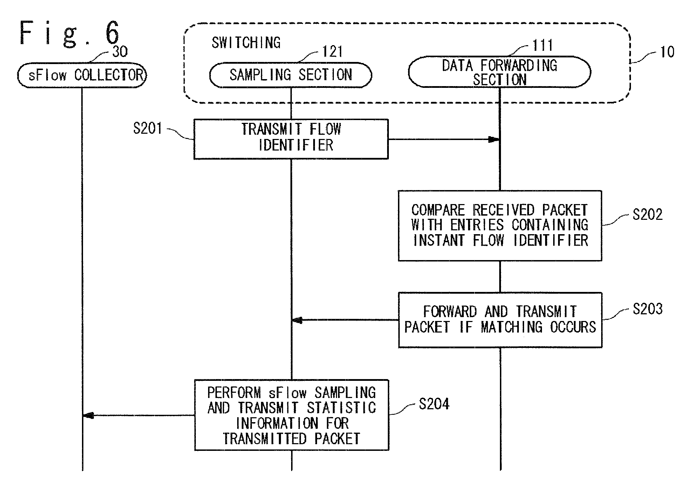

Processes performed in this exemplary embodiment are described with reference to Fig. 6.

It should be noted that these processes correspond to the processes of Steps S105 to S110 in the first exemplary embodiment shown in Fig. 4. Other processes are same as those in the first exemplary embodiment shown in Fig. 4.

### (1) Step S201

The sampling section 121 informs the data forwarding section 111 of the flow identifiers specified as the data sources of the MIB 122, before the communication is started or when a data source of the MIB 122 is modified.

### (2) Step S202

When the communication is started, on the basis of a received packet and the informed flow identifiers, the data forwarding section 111 determines whether an entry exists for which the flow identifier contained in the "cookie" matches any of the informed flow identifiers and the received packet matches the matching condition (or the rule).

### (3) Step S203

When detecting an entry for which the flow identifier contained in the "cookie" matches any of the informed flow identifiers and the received packet matches the matching condition (or the rule), the data forwarding section 111 forwards the received packet in accordance with the action defined in the matching entry, and transmits the received packet to the sampling section 121 as a sample packet. In this process, the sampling packet may detect a received packet to be forwarded to an external entity.

### (4) Step S204

The sampling section 121 performs random sampling (sampling defined in sFlow) on the packets received from the data forwarding section 111 or packets to be forwarded to an external entity at a frequency defined as a threshold value on average (for example, one packet is sampled for every 1000 packets), and transmits the sampling values to the sFlow collector 30 as statistic information. For example, the sampling section 121 obtains various counter values and header information of packets, the number of which reaches the threshold value, for each flow (that is, in units of flows), and transmits the header information and the various counter values as the statistic information to the sFlow collector 30.

The packets matching the entries of the flow table in OpenFlow are more advantageous in performing sampling than the packets matching the data sources of the MIB in sFlow, since the number of the matching packets is larger.

This is because, while the matching with a data source of the MIB in sFlow occurs only if the header information of a packet perfectly matches, the matching with an entry of the flow table in OpenFlow occurs if a packet matches a combination of some parts of the header information defined as the rule of a flow.

### <Relation of Respective Exemplary Embodiments>

It should be noted that the above-described respective exemplary embodiments may be combined in an implementation. For example, the network system of this invention may include both of a switch according to the first exemplary embodiment and a switch according to the second exemplary embodiment. Alternatively, each switch may be configured so that a user can select or set which of the functions according to the first and second exemplary embodiments is effective.

### <Advantage of the Present Invention>

By using OpenFlow to allow finely specifying packets for which sampling is to be performed, sampling values can be obtained for each of the finely-specified flows, and filtering is realized in sampling according to sFlow. This makes it possible to obtain sampling values which have been unable to be obtained by conventional sFlow.

### <Additional Note>

Some or all of the above-described exemplary embodiments may be represented as the below-described additional notes. Note that actual implementations are not limited to the below-described examples.

### [Additional Note 1]

A network system, including:
switches adapted to OpenFlow and sFlow;
a controller controlling a path formed by the switches
wherein each switch includes:
   an OpenFlow processor which holds flow identifiers in cookies of entries registered into a flow table by the controller and performs a process in accordance with an action defined in an entry for a received packet matching a rule of the entry; and
   an sFlow processor which obtains a flow identifier specified as a data source in an MIB used in sFlow and obtains statistic information of packets matching the entries on the basis of the obtained flow identifier.

### [Additional Note 2]

The network system according to the additional note 1, wherein the OpenFlow processor records statistic information of a received packet matching the rule of an entry into the entry, and
wherein, when the flow identifier specified as the data source in the MIB matches the flow identifier contained in an entry, the sFlow processor obtains the statistic information recorded in the entry.

### [Additional Note 3]

The network system according to additional note 1 or 2, wherein the OpenFlow processor transmits to the sFlow processor a received packet matching the rule of an entry containing a flow identifier informed from the sFlow processor as a response, and
wherein the sFlow processor informs the OpenFlow processor of the flow identifier specified as the data source in the MIB, and performs sampling defined in sFlow for the packet received from the OpenFlow processor as the response to obtain a sampling value defined in sFlow as the statistic information.

### [Additional Note 4]

The network system according to any one of additional notes 1 to 3, wherein the controller generates a flow identifier by compressing header information of a packet and sets the generated flow identifier to the flow table and the MIB.

### <Remark>

Although exemplary embodiments of the present invention are described in detail in the above, actual implementations are not limited to the above-described exemplary embodiments; the present invention encompasses modifications which do not depart from the essence of the present invention.

This application is based upon and claims the benefit of priority from Japanese patent application No. 2011-006719, and the disclosure of Japanese patent application No. 2011-006719 is incorporated herein by reference.

## Claims

1. A network system, comprising:
a controller; and
a switch,
wherein said controller includes:
a flow identifier manager having a function of assigning a flow identifier to a predetermined flow;
an entry manager having a function of setting a flow table of said switch with entries in each of which a rule and an action are defined according to which said switch uniformly controls respective packets constituting a flow and a function of registering the flow identifier assigned to the predetermined flow into a predetermined region of an entry related to the predetermined flow in said flow table,
wherein said switch includes:
a forwarding section having a function of performing actions defined in said entries for received packets matching rules defined in said entries and recording statistic information of the received packets into said entries; and
a statistical processing section having a function of obtaining a flow identifier corresponding to a flow specified as a target from which statistic information is to be obtained and obtaining statistic information of packets matching an entry containing the obtained flow identifier at a predetermined frequency.

2. The network system according to claim 1, wherein said statistical processing section has a function of obtaining statistic information recorded in the entry for which the flow identifier contained in the entry matches the flow identifier specified as the target from which statistic information is to be obtained.

3. The network system according to claim 1 or 2, wherein said forwarding section has a function of transmitting a received packet matching an entry containing the flow identifier informed from said statistical processing section to said statistical processing section as a response, and
wherein said statistical processing section has a function of informing said forwarding section of the flow identifier specified as the target from which statistic information is to be obtained, and performing sampling for a packet received from said forwarding section as the response to obtain a sampling value as the statistic information.

4. The network system according to any one of claims 1 to 3, wherein said flow identifier manager has a function of generating a flow identifier by compressing header information of a packet, and
wherein said entry manager has a function of setting the generated flow identifier to said flow table to specify the target from which statistic information is to be obtained.

5. A controller, comprising:
a flow identifier manager having a function of assigning a flow identifier to a predetermined flow; and
an entry manager having a function of setting a flow table of said switch with entries in each of which a rule and an action are defined according to which the switch uniformly controls respective packets constituting a flow,
wherein said entry manager has a function of registering the flow identifier assigned to the predetermined flow into a predetermined region of an entry related to the predetermined flow in said flow table to thereby specify a target from which statistic information is to be obtained.

6. A switch, comprising:
a flow table for setting entries in each of which a rule and an action are defined for uniformly controlling respective packets constituting a flow wherein each of the entries has a region storing a flow identifier corresponding to the flow;
a forwarding section having a function of performing actions defined in said entries for received packets matching rules defined in the entries and recording statistic information of the received packets into said entries; and
a statistical processing section having a function of obtaining a flow identifier corresponding to a flow specified as a target from which statistic information is to be obtained and obtaining statistic information of packets matching an entry containing the obtained flow identifier at a predetermined frequency.

7. A traffic monitoring method, comprising:
by a controller, setting a flow table of a switch with entries in each of which a rule and an action are defined according to which said switch uniformly controls respective packets constituting a flow;
by the controller, assigning a flow identifier to a predetermined flow;
by the controller, registering the flow identifier assigned to the predetermined flow into a predetermined region of an entry related to the predetermined flow in said flow table;
by said switch, performing actions defined in said entries for received packets matching rules defined in said entries to record statistic information of the received packets into said entries; and
by said switch, obtaining a flow identifier corresponding to a flow specified as a target from which statistic information is to be obtained and obtaining statistic information of packets matching an entry containing the obtained flow identifier at a predetermined frequency.

8. The traffic monitoring method according to claim 7, further comprising:
by said switch, obtaining statistic information recorded in the entry for which the flow identifier contained in the entry matches the flow identifier specified as the target from which statistic information is to be obtained.

9. The traffic monitoring method according to claim 7 or 8, further comprising:
by said switch, searching for an entry containing in said predetermined region a flow identifier matching the flow identifier specified as the target from which statistic information is to be obtained,
by said switch, if the entry containing the matching flow identifier is found, performing sampling for a received packet matching the rule of the entry containing the matching flow identifier to obtain a sampling value as the statistic information.

10. The traffic monitoring method according to any one of claims 7 to 9, further comprising:
by said controller, generating a flow identifier by compressing header information of a packet;
by said controller, setting the generated flow identifier to said flow table; and
by said controller, specifying the generated flow identifier as the target from which statistic information is to be obtained.

11. A recording medium recording a program which causes a controller to perform steps of:
setting a flow table of a switch with entries in each of which a rule and an action are defined according to which said switch uniformly controls respective packets constituting a flow;
assigning a flow identifier to a predetermined flow; and
registering the flow identifier assigned to the predetermined flow into a predetermined region of an entry related to the predetermined flow in said flow table to thereby specify a target from which statistic information is to be obtained.

12. A recording medium recording a program which causes a switch to perform steps of:
when receiving a packet, searching a flow table set with entries in each of which a rule and an action are defined for uniformly controlling respective packets constituting a flow, wherein each of the entries has a region storing a flow identifier corresponding to the flow;
performing actions defined in said entries for received packets matching rules defined in the entries and recording statistic information of the received packets into said entries; and
obtaining a flow identifier corresponding to a flow specified as a target from which statistic information is to be obtained and obtaining statistic information of packets matching an entry containing the obtained flow identifier at a predetermined frequency.
